(19) **Europäisches Patentamt European Patent Office Office européen des brevets**

(11) **EP 2 141 379 B1**

(12) **FASCICULE DE BREVET EUROPEEN**

(45) Date de publication et mention de la délivrance du brevet:
**20.03.2013 Bulletin 2013/12**

(51) Int Cl.:
**F16D 48/06** (2006.01)　　**F16D 48/08** (2006.01)

(21) Numéro de dépôt: **09290470.5**

(22) Date de dépôt: **22.06.2009**

(54) **Procédé pour contrôler la phase de fermeture d'un embrayage d'un système de transmission robotisée automobile**

Verfahren zum Kontrollieren der Schließphasen einer Kupplung eines robotergesteuerten Übersetzungssystems eines Autos

Method for controlling the clutch-closing phase of a robotised transmission system in an automobile

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **04.07.2008 FR 0803822**

(43) Date de publication de la demande:
**06.01.2010 Bulletin 2010/01**

(73) Titulaire: **IFP Energies nouvelles 92852 Rueil-Malmaison Cedex (FR)**

(72) Inventeurs:
- **Tona, Paolino 69007 Lyon (FR)**
- **Amari, Rachid 69007 Lyon (FR)**
- **Alamir, Mazen 38400 Saint-Martin-d'Heres (FR)**

(56) Documents cités:
**EP-A- 1 072 459　　DE-A1-102006 010 982
DE-A1-102006 037 838　　FR-A- 2 887 606
JP-A- 2005 117 212**

**Description**

La présente invention concerne le domaine des systèmes de contrôle automatique d'un moteur d'un véhicule.

En particulier, l'invention concerne un procédé pour contrôler la phase de fermeture d'un embrayage dans un système de transmission robotisée automobile.

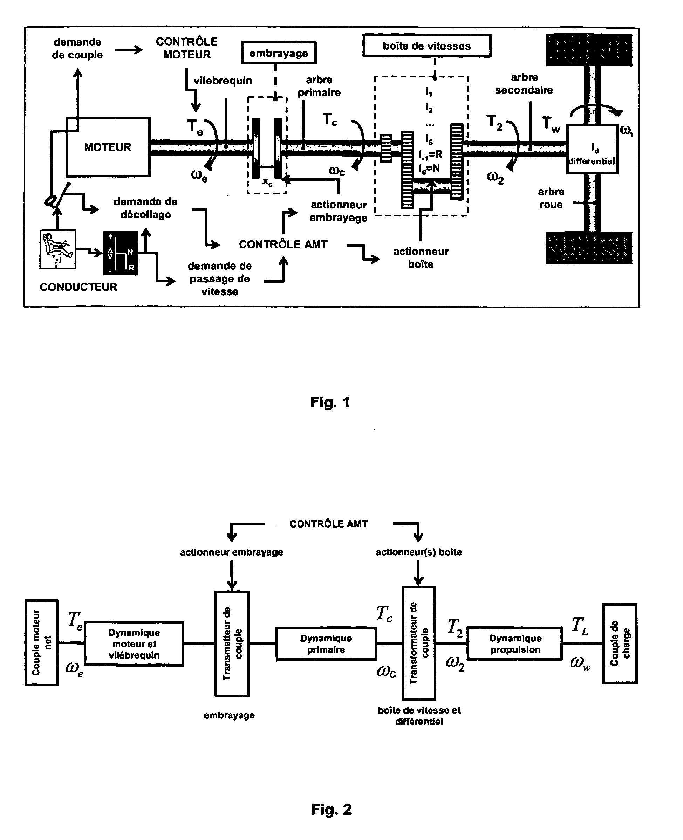

Les systèmes de transmission robotisée, ou systèmes de transmission manuelle automatique (AMT, « Automated Manual Transmissions »), constituent une solution intermédiaire entre les transmissions manuelles classiques et les transmissions automatiques. A la différence de ces dernières, caractérisées par des composants mécaniques complexes tels que des convertisseurs de couple et des trains épicycloïdaux, les transmissions robotisées utilisent des organes (embrayage, boîte de vitesse) ayant une mécanique traditionnelle, commandés, non pas par le conducteur, mais par une ou plusieurs unité(s) de contrôle embarquée(s). La figure 1 montre un schéma générique de transmission robotisé. La figure 2 montre un schéma conceptuel de transmission robotisé

Tout système de contrôle d'une transmission robotisée, embarqué dans une ou plusieurs ECU (Electronic Control Unit), doit générer des consignes pour :

- l'asservissement (électrique, pneumatique ou hydraulique) de la position de l'embrayage (actionneur d'embrayage);

- l'asservissement (électrique, pneumatique ou hydraulique) des engrenages de la boîte de vitesse (actionneur(s) de boîte de vitesse), traduisant le changement de vitesse décidé par le conducteur.

Ainsi, dans une transmission robotisée, ce sont les ECU dédiées au contrôle de la transmission qui permettent de réaliser les demandes du conducteur (décollage et passage de vitesses), à travers les actionneurs mentionnés ci-dessus, et ceci en collaboration avec l'ECU du contrôle moteur, qui détermine le couple produit par le moteur.

Le décollage est la manoeuvre consistant à mettre en mouvement un véhicule à l'arrêt, mouvement obtenu en transmettant une fraction de plus en plus importante du couple moteur à l'arbre primaire de transmission, et donc aux roues, à travers une fermeture progressive de l'embrayage. L'embrayage accouple (progressivement puis intégralement) le volant moteur à l'arbre primaire, en transmettant ainsi le couple produit dans le moteur (au net des frottements de l'ensemble moteur vilebrequin) à l'arbre primaire. Dans ce schéma, l'embrayage peut donc être :

- complètement ouvert (désengagé, débrayé), avec couple nul transmis à l'arbre primaire ;

- complètement fermé (engagé, embrayé), avec le couple moteur intégralement transmis à l'arbre primaire ;

- glissant, en train de se fermer ou de s'ouvrir. C'est dans la phase de glissement en fermeture qu'on a la transmission progressive du couple moteur vers l'arbre primaire.

Dans le cas d'une transmission manuelle classique, le conducteur réalise la fermeture progressive de l'embrayage en dosant en même temps la pression exercée sur la pédale embrayage et la pression exercé sur la pédale accélérateur. Son expérience de conducteur déterminera la réussite de la manoeuvre, ou bien son échec (calage du moteur, surrégime, fortes oscillations). Dans le cas d'une transmission robotisée, la pédale d'embrayage est absente, et c'est au système de contrôle de la transmission de doser l'action de l'embrayage, et de la coordonner avec la production de couple du moteur pour garantir le bon déroulement de la manoeuvre de décollage.

La fermeture progressive de l'embrayage, et sa coordination avec la production du couple moteur, est donc la phase clé du contrôle de transmission robotisée. Pour comprendre le fonctionnement du groupe motopropulseur dans cette phase, il faut considérer que le couple transmis par l'embrayage (fraction du couple moteur) est vu comme un couple négatif coté vilebrequin (il se soustrait donc au couple net fourni par le moteur) et comme un couple positif coté transmission en aval de l'embrayage. Au net des pertes transitoires et statiques dues aux élasticités, aux frottements et à l'efficacité de chaque élément mécanique. C'est ce couple qui, démultiplié par le rapport de boîte, est transmis aux roues. L'état du groupe motopropulseur est alors défini par des variables mesurées en amont et en aval de l'embrayage : typiquement, le régime moteur en amont, toujours disponible sur un véhicule, plus (au moins) une mesure de vitesse en aval de l'embrayage : vitesse de l'arbre primaire, de l'arbre secondaire ou vitesse des roues. Ces variables ne sont pas systématiquement mesurées sur un véhicule de série, mais doivent l'être dans un véhicule équipé de transmission robotisée.

**État de la technique**

Pour réaliser les deux fonctions principales d'un système de transmission robotisée, décollage et passage de vitesses, les systèmes de contrôle des voitures de série calculent généralement la consigne de l'actionneur d'embrayage à partir de tableaux (*cartographies*) pré remplis, en fonction du couple demandé par le conducteur (position pédale accélérateur), du régime moteur, du régime arbre primaire (ou autre vitesse coté transmission) et d'autres paramètres, tels que le rapport de boîte (dans le cas du passage de vitesses).

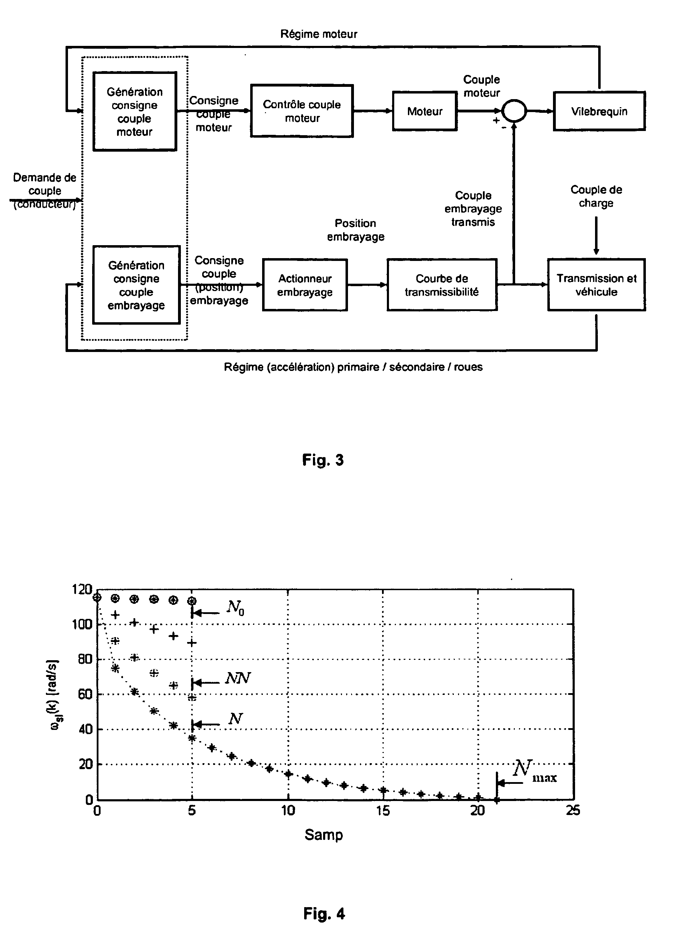

Côté contrôle moteur, il faut s'assurer que le régime moteur reste compatible avec la manoeuvre considérée, malgré le couple négatif qui agit sur le vilebrequin (il faut donc que le contrôle moteur augmente le couple moteur en conséquence). D'un point de vue systémique, ce type de structure de contrôle n'est autre qu'un cas particulier de la structure générale de figure 3. Ce schéma souligne que dans le contrôle de la phase de glissement de l'embrayage, on dispose de deux « manettes » : le couple moteur qui agit seulement sur le vilebrequin, et le couple transmis par l'embrayage qui agit à la fois sur le vilebrequin (comme couple négatif) et sur l'aval de la transmission jusqu'aux roues. Il s'agit, pour le système de contrôle et en utilisant la terminologie de l'Automatique, de deux *actionneurs* qui agissent en *entrée* du *système* groupe motopropulseur. Pour connaître l'état du système, et agir en conséquence, il faut en mesurer au moins deux *sorties*, le régime moteur et l'une des vitesses aval embrayage, par exemple, le régime arbre primaire. Les entrées du système groupe motopropulseur, c'est-à-dire les couples moteur et embrayage, ne sont jamais mesurés dans un véhicule de série, mais seulement estimés, et avec beaucoup d'imprécisions.

Ce contrôle par cartographies, typique des voitures de série, ne permet pas de traduire facilement les spécifications à respecter pendant la fermeture de l'embrayage : réalisation des demandes conducteur, confort, maintien du fonctionnement correct du groupe motopropulseur. En outre, il demande un long travail de calibration pour remplir les cartographies.

Pour s'affranchir des méthodes basées sur des cartographies, on connaît des solutions basées sur des lois de commande, ou lois de contrôle, inspirées des principes de l'Automatique. Ces lois ne sont plus basées seulement sur des tableaux remplis au préalable. Ces solutions sont basées sur des algorithmes qui calculent les entrées à envoyer vers le système groupe motopropulseur, couple moteur et couple embrayage, à partir de mesures de l'état de ce système (typiquement régime moteur et régime arbre primaire), conçus en utilisant le principe de rétroaction (*feedback*).

Pour qu'elles soient utilisables dans le cadre du contrôle moteur d'un véhicule, ces lois de commande en rétroaction doivent permettre de satisfaire un certain nombre de spécifications : le respect de contraintes garantissant un fonctionnement correct du moteur thermique, le respect de contraintes garantissant le confort à l'engagement de l'embrayage (aucune d'oscillation), et le respect de la volonté du conducteur. Un procédé selon le préambule de la revendication 1 est connu de EP-A-1 072 459.

Or, ces techniques ne peuvent pas gérer explicitement ces contraintes, c'est-à-dire s'assurer qu'une ou plusieurs variables du système à contrôler (entrées, sorties ou état), ou leurs dérivées, ne dépassent pas certaines limites fixées comme spécifications.

Ainsi, l'objet de l'invention est un procédé alternatif pour contrôler en temps réel un embrayage automobile dans un système de transmission robotisée, au moyen d'une loi de commande permettant de s'affranchir des problèmes des techniques antérieures. Pour y parvenir, le procédé traduit la demande du conducteur en terme de vitesse de glissement $\omega_{sl}$ et de régime moteur $\omega_e$, et utilise une loi de commande CMPC pour asservir cette vitesse de glissement et ce régime moteur.

**Le procédé selon l'invention**

L'objet de l'invention est un procédé pour contrôler un embrayage automobile dans un système de transmission robotisée, au sein d'un véhicule comportant un moteur relié à un arbre primaire via ledit embrayage. Le procédé comporte les étapes suivantes :

- on traduit une demande du conducteur sur la pédale d'accélérateur en terme de vitesse de glissement $\omega_{sl}$, définie par la différence entre un régime du moteur $\omega_e$ et un régime de l'arbre primaire $\omega_c$

- on définit des contraintes sur des actionneurs du moteur et de l'embrayage pour respecter leurs limites de fonctionnement ;

- on définit des contraintes d'agréments pour garantir un confort lors d'une phase d'engagement de l'embrayage ;

- pour respecter lesdites contraintes d'agréments, on définit une trajectoire de référence de ladite vitesse de glissement, en définissant pour chaque pas de contrôle, une valeur de consigne $\omega_{sl}^{ref}$ pour ladite vitesse de glissement en fonction d'un temps $N_f^{\bullet}$ d'engagement de l'embrayage ;

- à partir de l'expression de ladite trajectoire de référence, on définit une expression analytique permettant de calculer en temps réel un ensemble de trajectoires de commande de ladite vitesse de glissement, au moyen d'une loi de commande prédictive par modèle avec contraintes, dite commande CMPC ;

- on sélectionne parmi l'ensemble desdites trajectoires de commande, celle qui respecte les contraintes sur les actionneurs au moyen d'une technique de recherche dichotomique ; et

- on contrôle ledit embrayage au moyen de ladite trajectoire de commande sélectionnée.

Selon l'invention on peut définir les contraintes sur les actionneurs en imposant des valeurs minimales et maximales au couple moteur et au couple embrayage, ainsi que des valeurs minimales et maximales aux dérivées de ces couples.

On peut définir les contraintes d'agréments en imposant que la vitesse de glissement et sa dérivée sont nulles lors de la phase d'engagement de l'embrayage.

Selon l'invention, la consigne $\omega_{sl}^{ref}$ peut être définie pour chaque pas de contrôle $k$ par la relation suivante :

$$\forall i \in \left\{1,\dots,N_p-1\right\}$$

$$\omega_{sl}^{ref}(k+i) = \frac{1-i/N_f^\bullet}{\left(1+\lambda \cdot i/N_f^\bullet\right)^2}\,\omega_{sl}^k$$

avec :

- $N_p$ est un entier définissant un horizon de prédiction ;
- $\lambda$ est un paramètre à calibrer.

Le paramètre $\lambda$ est avantageusement choisi de façon à ce que l'engagement ait lieu avec une dérivée de la vitesse de glissement quasi nulle.

Enfin on peut générer une seconde consigne $\omega_{sl}^{ref}$ pour le régime moteur définie par :

$$\omega_e^{ref} = \max\left\{\omega_e^0,\,\mathrm{T}^{-1}\!\left(T_e^d\left(X_{Pedal},\omega_e\right)\right)\right\}$$

où :

- $\omega_e^0$ est une consigne constante de ralenti ;
- T est un couple maximum fonction du régime $\omega_e$
- $T_e^d$ est un couple moteur demandé par le conducteur.
- $X_{Pedal}$ est une position de la pédale d'accélérateur.

D'autres caractéristiques et avantages de l'invention, apparaîtront à la lecture de la description ci-après d'exemples non limitatifs de réalisations, en se référant aux figures annexées et décrites ci-après.

**Présentation succincte des figures**

- La figure 1 montre un schéma générique de transmission robotisé.

- La figure 2 montre un schéma conceptuel de transmission robotisé

- La figure 3 illustre une structure générale d'un contrôle pour la phase de glissement de l'embrayage.

- La figure 4 illustre le principe de la recherche dichotomique des prédictions de la vitesse de glissement respectant les contraintes.

**Description détaillée du procédé**

La fermeture progressive d'un embrayage, et sa coordination avec la production d'un couple moteur donné, est une phase clé du contrôle de transmission robotisée. Dans cette phase, on doit assurer :

- le maintien du fonctionnement correct du groupe motopropulseur (le système) : ni calage, ni surrégime du moteur ;

- le confort du conducteur : minimisation des oscillations à la fermeture de l'embrayage ;

- le respect de la volonté du conducteur : par exemple, décollage plus court si l'on appuie plus sur la pédale d'accélérateur, décollage abandonné si on relâche la pédale.

Selon l'invention, pour prendre en compte de façon transparente (pour le conducteur) ces spécifications, on utilise une approche basée sur une loi de commande capable d'optimiser un critère, tout en gérant des contraintes. Pour ce faire, on utilise la technique dite de « commande prédictive par modèle avec contraintes » (Constrained Model Predictive Control, CMPC), décrite, entre autres, dans : D. Q. Mayne, J. B. Rawlings, C. V. Rao, and P. O. Scokaert, "Constrained model predictive control: Stability and optimality," Automatica, 36:789-814, 2000. La possibilité d'intégrer des contraintes sur les entrées, les sorties et les états du système (par exemple régime moteur minimum et maximum, rapidité de variation du couple embrayage) rend ce type de commande particulièrement bien adapté au problème technique de l'invention.

Cependant, cette technique de commande CMPC, dans sa formulation standard, n'est pas applicable à des groupes motopropulseurs, qui sont caractérisés par des dynamiques rapides. En effet, pour être efficace, un système de contrôle pour l'ensemble moteur-transmission doit pouvoir calculer une nouvelle commande à des intervalles de temps relativement petits (quelques dizaines de millisecondes, au maximum). La formulation standard de l'optimisation dans la commande CMPC ne permet pas d'effectuer ce calcul en si peu de temps. Il n'est pas possible d'utiliser une loi de commande CMPC classique pour effectuer une optimisation en ligne (en temps réel).

Selon l'invention, on construit une nouvelle approche pour l'optimisation du calcul de la commande CMPC dans des délais de temps compatibles avec les impératifs d'un système de contrôle automobile. Ainsi il est possible, tout en intégrant les spécifications nécessaires au bon déroulement d'un décollage du point de vue agrément et consommation :

- de calculer la commande très rapidement en temps réel, avec des périodes compatibles avec les puissances de calcul des unités de contrôle embarqués montées sur les véhicules de série;

- de traduire de façon transparente la volonté du conducteur.

Ce procédé pour contrôler en temps réel un embrayage automobile dans un système de transmission robotisée, comporte les étapes suivantes :

- on traduit la demande du conducteur en terme de vitesse de glissement $\omega_{sl}$, définie par la différence entre le régime moteur $\omega_e$ et le régime de l'arbre primaire $\omega_c$

- on définit des contraintes sur des actionneurs du moteur et de l'embrayage pour respecter leurs limites de fonctionnement ;

- on définit des contraintes d'agréments pour garantir un confort lors d'une phase d'engagement de l'embrayage ;

- on définit une trajectoire de référence de la vitesse de glissement, ;

- on calcule un ensemble de trajectoires de commande au moyen d'une loi de commande CMPC ; et

- on sélectionne parmi l'ensemble de ces trajectoires de commande celle qui respecte les contraintes sur les actionneurs au moyen d'une technique de recherche dichotomique.

Ainsi, selon l'invention, on respecte les spécifications de la façon suivante :

- le maintien du fonctionnement correct du groupe motopropulseur en appliquant des contraintes sur des variables mesurées, telles que le régime moteur : régime moteur supérieur à une valeur minimum, pour empêcher le calage; régime moteur inférieur à une valeur maximum pour éviter les surrégimes.

- le respect de la volonté du conducteur en traduisant la demande du conducteur en terme de vitesse de glissement $\omega_{sl}$, définie par la différence entre le régime moteur $\omega_e$ et le régime de l'arbre primaire $\omega_c$.

- le confort du conducteur à l'engagement de l'embrayage, en appliquant des contraintes sur la vitesse de glissement $\omega_{sl}$ (appelée aussi régime de glissement).

- la détermination d'une loi de commande pour l'embrayage respectant ces spécifications en temps réel, en utilisant la vitesse de glissement $\omega_{sl}$ et le régime moteur $\omega_e$, comme paramètres à asservir.

Avant de décrire en détail les étapes du procédé, on rappelle qu'un système de commande CMPC comprend :

1- Un modèle interne (*modèle de commande*) capable de simuler le comportement du système à commander plus rapidement que le temps réel;

2- Une trajectoire de référence qui définit le comportement désiré en boucle fermée;

3- Le principe d'horizon fuyant : on applique seulement la première composante de la trajectoire optimale de commande, en répétant tous les calculs au pas d'échantillonnage suivant.

4- La caractérisation de la trajectoire de commande par un nombre fini de « coups » (ou autres paramètres)

5- L'optimisation en ligne sous *contraintes*, pour déterminer la stratégie de commande future.

1- Définition d'un modèle simulant le comportement du groupe motopropulseur

Il s'agit de définir un modèle de commande capable de simuler le comportement du système à commander plus rapidement que le temps réel. Selon un exemple, on utilise comme modèle de commande un système non linéaire sous forme d'état à temps discret :

$$\begin{cases} X_{k+1} = f(X_k, u_k) \\ y = g(X_k) \end{cases}$$

où $X \in \mathrm{R}^n$, $u \in \mathrm{R}^m$, $y \in \mathrm{R}^q$ sont respectivement, l'état du système, les commandes (entrées du système) et les sorties du système (variables commandées).

Dans le cas de contrôle d'embrayage :

- les commandes du système ($U_k$) ou entrées du système peuvent être :

  - la consigne de couple moteur
  - la consigne de couple embrayage

- les sorties du système ($Y_k$) peuvent être :

  - le régime moteur $\omega_e$
  - le régime de l'arbre primaire $\omega_c$
  - ou une autre vitesse de la transmission directement reliée au régime de l'arbre primaire

- l'état du système $X_k$ peut être :

L'ensemble des variables indiquant l'état physique du groupe motopropulseur (vitesses ou combinaisons linéaires de vitesses). Cet état est déterminé par la complexité choisie pour le modèle (prise en compte de torsions, frottements, jeux mécaniques).

La commande prédictive CMPC (standard) consiste à calculer à chaque période de contrôle une séquence de commande optimale (selon l'invention, il s'agira en revanche d'un ensemble de séquences de commande fonction d'un paramètre qui spécifie une trajectoire de vitesse de glissement), solution d'un problème d'optimisation contraint :

$$
\begin{cases}
J_k(\cdot) = \sum_{i=k+1}^{k+N} \left( (r_k - y_k)^T Q (r_k - y_k) + (u_{k-1} - u_{k-2})^T R (u_{k-1} - u_{k-2}) \right) \\
\qquad SOUS\ LES\ CONTRAINTES \\
X_{k+1} = f(X_k, u_k) \\
\qquad y = g(X_k) \\
\qquad u_k = u_{k-1} + du_k \\
X_{\min} \leq X_k \leq X_{\max} \\
\qquad \alpha_k \leq u_k \leq \beta_k \\
du_k^{\min} \leq du_k \leq du_k^{\max}
\end{cases}
$$

où e est l'erreur entre la consigne et la mesure réelle, $N$ l'horizon de prédiction, $Q$ et $R$ sont des matrices de pondération associées respectivement aux erreurs consignes-mesures et aux commandes.

On peut choisir un modèle simple, négligeant certaines dynamiques de la transmission. Dans ce cas, il est préférable d'introduire des termes d'incertitude qui peuvent être reconstruit par estimation. Le modèle le plus simple a la forme suivante :

$$
J_e \dot{\omega}_e = T_e^{SP} - T_e^{SP} + \delta_e(\cdot)
$$

$$
[J_c + J_{eq}(i_g, i_d)]\dot{\omega}_c = sign(\omega_{sl}) T_c^{SP} - \delta_c(\cdot)
$$

où :

$J_e$ : est l'inertie du moteur, du vilebrequin et de la partie de l'embrayage côté moteur;

$J_c$ : est l'inertie de l'arbre primaire et du reste de l'embrayage;

$J_{eq}(i_g, i_d)$ : est l'inertie équivalente de la transmission en aval de l'embrayage qui dépend du rapport de boîte engagé $i_g$ et du rapport du différentiel $i_d$ ;

$\omega_{sl}$ : est la vitesse de glissement entre moteur et arbre primaire ;

$T_e^{SP}$ : est la consigne de couple moteur, que le système de contrôle moteur traduira en un couple net $T_e$ sur le vilebrequin ;

$T_c^{SP}$ : est la consigne de couple embrayage, que le système de contrôle embrayage traduira en un couple $T_c$ transmis par l'embrayage ;

Le terme $\delta_e(\cdot)$ regroupe toutes les incertitudes affectant la dynamique du vilebrequin : frottements dans le moteur, erreurs dans les paramètres du moteurs, erreurs dans la courbe de transmissibilité de couple de l'embrayage, dynamiques négligées, etc.

Le terme $\delta_c(\cdot)$ regroupe toutes les incertitudes affectant la dynamique de la transmission en aval de l'embrayage : erreurs dans la courbe de transmissibilité de couple de l'embrayage, erreurs dans les paramètres de la transmission, dynamiques négligées, etc.

Les termes $\delta_e(\cdot)$ et $\delta_e(\cdot)$ sont reconstitués par estimation dynamique, par exemple par des estimateurs de type Kalman.

Des modèles plus complexes peuvent être utilisés, mais il est toujours préférable d'intégrer des termes d'incertitude à reconstruire en parallèle du contrôle, à travers les mesures disponibles.

2- Définition des contraintes

On définit deux types de contraintes : les contraintes sur les actionneurs du moteur et d'embrayage, notées $C_k^U$ , et les contraintes d'agrément, notées $C_k^G$ .

Les contraintes sur les actionneurs $C_k^U$ permettent de respecter les limites de fonctionnement du moteur et de l'embrayage. Par exemple, il ne faut pas que l'embrayage transmette plus que x Nm de couple durant le décollage, ou il ne faut pas demander au moteur plus de couple qu'il n'est capable de produire à un certain régime. Ces contraintes sur les actionneurs sont typiquement des limitations sur les maximums et minimums des couples actionneurs et de leurs dérivées :

$$T_e \in \left[ T_e^{\min}, T_e^{\min}(\omega_e) \right]$$

$$T_c \in \left[ T_c^{\min}, T_c^{\min}(\omega_e) \right]$$

$$\dot{T}_e \in \left[ \dot{T}_e^{\min}, \dot{T}_e^{\min}(\omega_e) \right]$$

$$\dot{T}_c \in \left[ \dot{T}_e^{\min}, \dot{T}_e^{\min}(\omega_e) \right]$$

Les contraintes d'agrément $C_k^G$ doivent en premier lieu assurer qu'il n'y a pas d'oscillations à l'engagement, qui a lieu à l'instant $t_f$, condition assurée par l'égalité des vitesses et des accélérations à l'engagement, c'est-à-dire à l'instant $t_f$ :

$$\omega_e(t_f) = \omega_c(t_f)$$

$$\dot{\omega}_e(t_f) = \dot{\omega}_c(t_f)$$

Cette condition de stabilité peut être assurée par des contraintes sur les vitesses de glissement entre le moteur et l'arbre primaire :

$$\omega_{sl}(t_f) = 0$$

$$\dot{\omega}_{sl}(t_f) \cong 0$$

où $\omega_{sl}$ est la vitesse de glissement entre le moteur et l'arbre primaire. Le maintien de ces contraintes pendant un temps suffisant permet également d'assurer la stabilité sur le reste de la transmission (égalité des vitesses et des accélérations entre arbre primaire et roues).

3- Définition de trajectoire de référence pour la vitesse de glissement,

Pour respecter ces contraintes, on définit une trajectoire de référence de la vitesse de glissement, en définissant pour chaque pas de contrôle *k*, une valeur de consigne pour cette vitesse de glissement. Ces consignes sont telles que les contraintes d'agréments sont respectées durant et à la fin de la phase d'engagement de l'embrayage.

Pour ce faire, on définit des consignes pour la vitesse de glissement, en faisant en sorte qu'elle s'annule après le temps $t_f$. On définit dans un premier temps un vecteur de données exogènes :

$$v \overset{\Delta}{=} \begin{pmatrix} \hat{\delta} \\ N^{\bullet}_f \\ X_{pedal} \end{pmatrix} \in R^2 \times R \times R \qquad (\overset{\Delta}{=} \text{ signifie « par définition »})$$

où $\hat{\delta} \overset{\Delta}{=} (\hat{\delta}_e, \hat{\delta}_c)$ sont les sorties des estimateurs, $N^*_f$ est la durée de la phase de fermeture de l'embrayage (dont dépend la durée du décollage) en nombre de pas d'échantillonnage (donc $N^*_f = t_f/\tau_s$, où $\tau_s$ est la période d'échantillonnage), $X_{pedal}$ est la position de la pédale d'accélérateur.

Le critère à minimiser peut alors s'écrire sous la forme paramétrique équivalente :

$$\min_{U_k \in C^U_k} J_v(U_k, X_k, r_k, \ldots)$$

$N^*_f$ est un paramètre à optimiser pour respecter les contraintes sur les actionneurs. Ce temps est lié à une trajectoire de vitesse de glissement $\omega_{sl}$ de la façon détaillée ci-après.

On associe des trajectoires (ensemble de consigne pour chaque pas de contrôle k) $\omega^{ref}_{sl}$ de la vitesse de glissement à la position de la pédale d'accélérateur. Cette association permet d'avoir une interactivité directe (transparente) avec les souhaits du conducteur (durant le décollage). La pression sur la pédale d'accélérateur est traduite en un temps d'engagement de l'embrayage $t_f$, et ce temps est utilisé pour définir une consigne $\omega^{ref}_{sl}$ de vitesse de glissement qui permet d'assurer la condition de stabilité de la transmission :

$$X_{Pedal} \quad \mapsto \quad t_f = f(X_{Pedal}) \quad \mapsto \quad \omega^{ref}_{sl} = h(t, t_f)$$

Ainsi, selon l'invention, l'expression de la trajectoire de référence à l'instant $k$, le long de l'horizon de prédiction $N$ est la suivante :

$$\forall i \in \{1, \ldots, N_p - 1\}$$

$$\omega^{ref}_{sl}(k+i) = \frac{1 - i/N^{\bullet}_f}{(1 + \lambda \cdot i/N^{\bullet}_f)^2} \omega^k_{sl}$$

A l'instant $i = N^*_f$, la vitesse de glissement sera nulle respectant aussi la première contrainte sur la stabilité de la transmission. On choisit le paramètre $\lambda$ suffisamment grand pour que l'engagement ait lieu avec une dérivée de la vitesse de glissement très proche de zéro. La deuxième contrainte sur la vitesse de glissement est ainsi également respectée. Dans la pratique, $\lambda = 2$ suffit.

Pendant que la vitesse de glissement suit la trajectoire indiquée ci-dessus, le régime moteur doit être asservi à une consigne $\omega^{ref}_e$ qui doit être la plus basse possible, pour limiter la consommation, mais garantir en même temps que le moteur puisse produire le couple demandé par le conducteur, issu de la cartographie de couple pédale (fonction du couple pédale et de la position de la pédale accélérateur), et limité par le couple maximum disponible à un régime moteur donné. Cette trajectoire de référence peut s'exprimer comme suit :

$$\omega_e^{ref} = \max\left\{\omega_e^0, \mathrm{T}^{-1}\left(T_e^d\left(X_{Pedal}, \omega_e\right)\right)\right\}$$

où :

$\omega_e^0$ est une consigne constante de ralenti ;

T est le couple maximum fonction du régime $\omega_e$ ;

$T_e^d$ est le couple demandé par le conducteur à travers la cartographie de couple pédale.

L'équation ci-dessus indique simplement que le régime moteur doit être régulé à $\omega_e^0$ dans le cas d'une faible demande de couple, c'est-à-dire d'un couple réalisable par le moteur au régime $\omega_e^0$. En revanche, quand la demande de couple est telle qu'elle ne peut plus être réalisée au régime $\omega_e^0$, la consigne $\omega_e^{ref}$ doit être augmentée jusqu'à un niveau compatible avec la demande.

4- Calcul de trajectoires de commandes optimales par commande CMPC

On calcule un ensemble de trajectoire de commande de la vitesse de glissement au moyen d'une loi de commande prédictive par modèle avec contraintes, dite commande CMPC.
On définit un critère d'optimisation quadratique $J(\cdot)$ qui dépend de l'état du groupe motopropulseur $X_k$, des commandes $U_k$, des consignes $r_k$, des contraintes sur les actionneurs $C_k^U$ et des contraintes d'agrément de conduite $C_k^G$ :

$$\begin{cases} \min J\left(U_k, X_k, r_k, \ldots\right) \\ SOUS\ LES\ CONTRAINTES \\ U_k \in C_k^U \\ g\left(X_k, U_k, \ldots\right) \in C_k^G \end{cases}$$

L'objectif du système de commande selon l'invention est d'asservir la vitesse de glissement $\omega_{sl}$ et le régime moteur $\omega_e$, respectivement, aux deux consignes $\omega_{sl}^{ref}$ et $\omega_e^{ref}$ définies précédemment. Cet objectif peut être formulé sous une forme quadratique, en utilisant la définition initiale du critère paramétrique associé à l'agrément de conduite :

$$J_{v(k)}\left(U(k), \omega(k)\right) \stackrel{\Delta}{=} \sum_{i=1}^{N} \left\| \begin{bmatrix} \omega_{sl}(k+i) - \omega_{sl}^{ref}(k+i) \\ \omega_e(k+i) - \omega_e^{ref}(k+i) \end{bmatrix} \right\|_Q^2$$

où :

$$U(k) = \left[ u^T(k), \ldots, u^T(k+N-1) \right]^T \in C^U(k) \subset \mathrm{R}^{2N}$$

et $N$ est l'horizon de prédiction.

Les prédictions $\omega_{sl}(k + \cdot)$ et $\omega_e(k + \cdot)$ sont basées sur l'état initial $\omega(k)$, la séquence des commandes futures $U$ et le vecteur de données exogènes $v$. Cette dynamique de prédiction est obtenue à partir du modèle de commande

$$J_e \dot{\omega}_e = T_e^{SP} - T_c^{SP} + \delta_e(\cdot)$$

$$\left[ J_c + J_{eq}(i_g, i_d) \right] \dot{\omega}_c = sign(\omega_{sl}^{ec}) T_c^{SP} - \delta_c(\cdot)$$

en faisant apparaître la vitesse de glissement et le régime moteur comme indiqué ci-dessous :

$$\dot{\omega}_{sl}\left(N_f^\bullet, X_{Pedal}\right) = J_e^{-1}\left(u_1 - u_2 + \hat{\delta}_e\right) - J_{cw}^{-1}(i_g, i_d)^{-1}\left[sign(\omega_{sl})u_2 - \hat{\delta}_c\right]$$

$$\dot{\omega}_e = J_e^{-1}\left(u_1 - u_2 + \hat{\delta}_e\right)$$

où $u_1 = T_e^{SP}$ et $u_2 = T_c^{SP}$

En écrivant la prédiction sur un horizon $N_p$ d'une manière compacte, on a :

$$A_p\left(J_e, J_{cw}(i_g, i_d)\right) \cdot U = S_p\left(\omega(k+i), \hat{\delta}(k+i), N_f^\bullet, X_{Pedal}\right)$$

avec $i \in \{1, \ldots, N_p\}$, $A_p \in \mathrm{R}^{2Np \times 2Np}$, $S_p \in \mathrm{R}^{2Np \times 1}$

Ce modèle de prédiction est affine en la commande, puisque $\omega_{sl}$ ne change pas de signe le long d'une prédiction (et, plus généralement, le long de tout le décollage).

Le critère quadratique non contraint introduit auparavant peut alors s'écrire

$$J_{v(k)}(U, \ldots) = U^T \cdot H\left(J_e, J_{cw}(i_g, i_d)\right) \cdot U + 2\left[W\left(\hat{\delta}, N_f^\bullet, X_{Pedal}, \omega^k\right)\right] \cdot U$$

avec

$$H \overset{\Delta}{=} A_p^T A_p \in \mathrm{R}^{2N_p \times 2N_p}, \quad W \overset{\Delta}{=} S_p^T A_p \in \mathrm{R}^{1 \times 2N_p}$$

Les matrices $A_p$ et $S_p$ peuvent être augmentées pour prendre en compte d'autres spécifications pour le système à commander. On peut par exemple, inclure une contrainte d'égalité sur le couple moteur que l'on veut avoir à l'instant $t_f$ de fermeture de l'embrayage, pour imposer qu'il soit égal au couple pédale demandé par le conducteur :

$$T_e(t_f) = T_e^d(t_f).$$

Pour chaque choix de la longueur de l'horizon de prédiction $N$, la commande optimale qui minimise le critère quadratique non contraint est :

$$\left\{ \hat{U}_N \overset{\Lambda}{=} -H^{-1} \cdot W\left(N, \hat{\delta}, X_{pedal}, \omega_{sl}^k, \omega_e^k\right)\right\}_{N \in \{N_f, \ldots\}}$$

### 5- Détermination de la trajectoire de commande optimale respectant toutes les contraintes

On sélectionne parmi l'ensemble des trajectoires de commande obtenues à l'étape précédente, celle qui respecte les contraintes sur les actionneurs, au moyen d'une technique de recherche dichotomique.

Pour différentes valeurs de $N$, on calcule la commande optimale en partant d'une valeur nominale $N_f = t_f(X_{Pedal})$ $/\tau_s$ ($\tau_s$ période d'échantillonnage de la commande) et en utilisant une recherche dichotomique pour trouver une trajectoire de la vitesse de glissement qui respecte les contraintes de saturation des commandes et la contrainte de conservation du signe de $\omega_{sl}$ : $sign(\omega_{sl}(k)\cdot \omega_{sl}(k)) \geq 0$ Cette contrainte de conservation du signe permet de conserver un modèle de prédiction de la commande affine, et donc d'obtenir une solution analytique.

La recherche dichotomique est possible vu que les valeurs élevées de $N$ permettent d'aller moins vite, avec une plus faible demande de couple. Cette paramétrisation permet à $\omega_{sl}$ de tendre vers zéro sans changement de signe.

La figure 4 illustre le principe de la recherche dichotomique des prédictions de la vitesse de glissement respectant les contraintes. La référence de vitesse de glissement est celle définie auparavant :

$$\forall i \in \left\{1, \ldots, N_p - 1\right\}$$

$$\omega_{sl}^{ref}(k+i) = \frac{1 - i/N_f^\bullet}{\left(1 + \lambda \cdot i/N_f^\bullet\right)^2} \omega_{sl}^{ref}(k)$$

Dans la figure 4, on suppose que la durée de la phase de glissement de l'embrayage, demandée par la pédale d'embrayage, est de 1s, ce qui donne, avec une période d'échantillonnage de 50ms, une valeur de $N^*_f$ égale à 21 échantillons (Samp) notée $N_{max}$ sur la figure 4. On effectue la recherche dichotomique sur un horizon de prédiction glissant fixé, de 5 échantillons dans cet exemple. Sur cet horizon, on calcule un ensemble de trajectoires paramétrées par un entier $NN$ que l'on fait varier entre une valeur minimum , $N$ qui identifie la trajectoire qui finirait par donner un temps d'engagement égal à $N^*_f$, et une valeur maximum très grande, qui satisfera assurément toutes les contraintes. Dans cet ensemble de trajectoires, on trouve, par recherche dichotomique, celle qui correspond à la valeur $NN$ la plus petite tout en respectant les contraintes.

Ainsi, en définissant une consigne sur la vitesse de glissement, en fonction du temps d'engagement $N_f^\bullet$ de l'embrayage, le modèle de prédiction est affine en la commande, puisque $\omega_{sl}^{ref}$ ne change pas de signe le long d'une prédiction (et, plus généralement, le long de tout le décollage). De ce fait, on peut transformer le critère initial

$$J_{v(k)}\left(U(k), \omega(k)\right) \overset{\Delta}{=} \sum_{i=1}^{N} \left\| \begin{matrix} \omega_{sl}(k+i) - \omega_{sl}^{ref}(k+i) \\ \omega_e(k+i) - \omega_e^{ref}(k+i) \end{matrix} \right\|_Q^2$$

qu'il faut résoudre sous contrainte, en un critère équivalent

$$J_{v(k)}\left(U, \ldots\right) = U^T \cdot H\left(J_e, J_{cw}(i_g, i_d)\right) \cdot U + 2\left[W\left(\hat{\delta}, N_f^\bullet, X_{Pedal}, \omega^k\right)\right] \cdot U$$

qui est fonction du paramètre $N^*_f$.

Or la solution s'obtient de manière analytique (donc par un calcul qui ne pose aucun problème en temps réel) :

$$\left\{ \hat{U}_N \overset{\wedge}{=} - H^{-1} \cdot W\left(N, \hat{\delta}, X_{pedal}, \omega_{sl}^k, \omega_e^k\right) \right\}_{N \in \{N_f, \ldots\}}$$

Il suffit alors de faire varier le paramètre $N_f^{\bullet}$ pour chercher la solution avec $N_f^{\bullet}$ minimal qui fait rentrer les commandes $U_n$ dans l'espace des contraintes (solution admissible avec $N_f^{\bullet}$ minimal). Si l'on effectue cette recherche par dichotomie, le coût en terme de calcul reste limité, et donc compatible avec le temps réel (les contraintes d'agrément sont respectées grâce à la « forme » de la trajectoire de vitesse de glissement).

L'invention permet ainsi de faire un contrôle en temps réel tout en utilisant une commande CMPC.

## Revendications

1. Procédé pour contrôler un embrayage automobile dans un système de transmission robotisée, au sein d'un véhicule comportant un moteur relié à un arbre primaire via ledit embrayage, dans lequel
   on traduit une demande du conducteur sur la pédale d'accélérateur en terme de vitesse de glissement $\omega_{sl}$, définie par la différence entre un régime du moteur $\omega_e$ et un régime de l'arbre primaire $\omega_c$
   **caractérisé en ce que** :

   - on définit des contraintes sur des actionneurs du moteur et de l'embrayage pour respecter leurs limites de fonctionnement ;
   - on définit des contraintes d'agréments pour garantir un confort lors d'une phase d'engagement de l'embrayage ;
   - pour respecter lesdites contraintes d'agréments, on définit une trajectoire de référence de ladite vitesse de glissement, en définissant pour chaque pas de contrôle, une valeur de consigne $\omega_{sl}^{ref}$ pour ladite vitesse de glissement en fonction d'un temps $N_f^{\bullet}$ d'engagement de l'embrayage ;
   - à partir de l'expression de ladite trajectoire de référence, on définit une expression analytique permettant de calculer en temps réel un ensemble de trajectoires de commande de ladite vitesse de glissement, au moyen d'une loi de commande prédictive par modèle avec contraintes, dite commande CMPC ;
   - on sélectionne parmi l'ensemble desdites trajectoires de commande, celle qui respecte les contraintes sur les actionneurs au moyen d'une technique de recherche dichotomique ; et
   - on contrôle ledit embrayage au moyen de ladite trajectoire de commande sélectionnée.

2. Procédé selon la revendication 1, dans lequel on définit lesdites contraintes sur lesdits actionneurs en imposant des valeurs minimales et maximales au couple moteur et au couple embrayage, ainsi que des valeurs minimales et maximales aux dérivées de ces couples.

3. Procédé selon l'une des revendications précédentes, dans lequel on définit lesdites contraintes d'agréments en imposant que la vitesse de glissement et sa dérivée sont nulles lors de la phase d'engagement de l'embrayage.

4. Procédé selon l'une des revendications précédentes, dans lequel la consigne $\omega_{sl}^{ref}$ est définie pour chaque pas de contrôle k par :

$$\forall i \in \left\{1, \ldots, N_p - 1\right\}$$

$$\omega_{sl}^{ref}(k+i) = \frac{1 - i/N_f^\bullet}{\left(1 + \lambda \cdot i/N_f^\bullet\right)^2} \omega_{sl}^k$$

avec :

- $N_p$ est un entier définissant un horizon de prédiction ;
- $\lambda$ est un paramètre à calibrer.

5. Procédé selon la revendication 4, dans lequel le paramètre $\lambda$ est choisi de façon à ce que l'engagement ait lieu avec une dérivée de la vitesse de glissement quasi nulle.

6. Procédé selon l'une des revendications précédentes, dans lequel on génère une seconde consigne $\omega_e^{ref}$ pour le régime moteur définie par :

$$\omega_e^{ref} = \max\left\{\omega_e^0, T^{-1}\left(T_e^d\left(X_{Pedal}, \omega_e\right)\right)\right\}$$

où :

- $\omega_e^0$ est une consigne constante de ralenti ;
- T est un couple maximum fonction du régime $\omega_e$
- $T_e^d$ est un couple moteur demandé par le conducteur.
- $X_{Pedal}$ est une position de la pédale d'accélérateur.

**Claims**

1. A method of controlling an automobile clutch in an automated transmission system, within a vehicle comprising an engine connected to a primary shaft via said clutch, wherein a driver's request on the accelerator pedal is translated in terms of sliding velocity $\omega_{sl}$, defined by the difference between an engine speed $\omega_e$ and a primary shaft speed $\omega_c$, **characterized in that** it comprises:

   - defining constraints on engine and clutch actuators so as to meet their operating limits,
   - defining driveability constraints to guarantee comfort during a clutch engagement phase,
   - in order to meet said driveability constraints, defining a reference trajectory for said sliding velocity by defining, for each control interval, a setpoint value $\omega_{sl}^{ref}$ for said sliding velocity as a function of a clutch engagement time $N_f^*$,
   - from the expression of said reference trajectory, defining an analytical expression allowing real-time calculation of a set of control trajectories for said sliding velocity, by means of a constrained model predictive control law referred to as CMPC control,
   - selecting, from the set of said control trajectories, the trajectory that meets the constraints on the actuators by means of a dichotomic search technique, and
   - controlling said clutch by means of said selected control trajectory.

2. A method as claimed in claim 1, wherein said constraints on said actuators are defined by imposing minimum and maximum values on the engine torque and on the clutch torque, as well as minimum and maximum values on the derivatives of these torques.

3. A method as claimed in any one of the previous claims, wherein said driveability constraints are defined by requiring a zero sliding velocity and derivative during the clutch engagement phase.

4. A method as claimed in any one of the previous claims, wherein setpoint value $\omega_{sl}^{ref}$ is defined for each control interval $k$ by:

$$\forall i \in \left\{1, \ldots, N_p - 1\right\}$$

$$\omega_{sl}^{ref}(k+i) = \frac{1 - i/N_f^*}{\left(1 + \lambda \cdot i/N_f^*\right)^2} \omega_{sl}^k$$

with:

- $N_P$ an integer defining a prediction horizon,
- $\lambda$ a parameter to be calibrated.

5. A method as claimed in claim 4, wherein parameter A is selected in such a way that engagement occurs with a quasi-zero sliding velocity derivative.

6. A method as claimed in any one of the previous claims, wherein a second setpoint value $\omega_{sl}^{ref}$ is generated for the engine speed, defined by:

$$\omega_e^{ref} = \max\left\{\omega_e^0, \mathrm{T}^{-1}\left(T_e^d\left(X_{Pedal}, \omega_e\right)\right)\right\}$$

where:

$\omega_e^0$ is a constant idle setpoint value

- T is a maximum torque depending on *speed* $\omega_e$

- $T_e^d$ is an engine torque required by the driver

- $X_{Pedal}$ is a position of the accelerator pedal.


**Patentansprüche**

1. Verfahren zum Steuern einer Automobilkupplung in einem automatisierten Antriebsstrang innerhalb eines Fahrzeugs, das einen Motor aufweist, der über die Kupplung mit einer Primärwelle verbunden ist, wobei eine Anforderung des Fahrers über das Gaspedal in eine Schlupfdrehzahl $\omega_{sl}$ übersetzt wird, die durch die Differenz zwischen einer Motordrehzahl $\omega_e$ und einer Primärwellendrehzahl $\omega_c$ definiert ist,
**dadurch gekennzeichnet, dass**:

- Nebenbedingungen für Aktuatoren des Motors und der Kupplung definiert werden, um deren Betriebsgrenzen einzuhalten;
- Komfort-Nebenbedingungen definiert werden, um einen Komfort während einer Phase des Einrückens der Kupplung zu garantieren;
- zur Erfüllung dieser Nebenbedingungen eine Referenztrajektorie der Schlupfdrehzahl definiert wird, indem für jeden Steuerungsschritt ein Sollwert $\omega_{sl}^{ref}$ für diese Schlupfdrehzahl in Abhängigkeit von einer Einrückzeit $N^*_f$ der Kupplung definiert wird;

- ausgehend von dem Ausdruck der Referenztrajektorie ein analytischer Ausdruck definiert wird, der es ermöglicht, in Echtzeit eine Menge von Trajektorien zur Regelung der Schlupfdrehzahl mittels eines Gesetzes der prädiktiven Regelung durch ein Modell mit Nebenbedingungen, als CMPC-Regelung (Constrained Model Predictive Control) bezeichnet, zu berechnen;

- aus der Menge dieser Regelungstrajektorien diejenige, welche die Nebenbedingungen für die Aktuatoren erfüllt, mittels eines Verfahrens der dichotomen Suche ausgewählt wird; und

- die Kupplung mittels der ausgewählten Regelungstrajektorie gesteuert wird.

2. Verfahren nach Anspruch 1, wobei die Nebenbedingungen für die Aktuatoren definiert werden, indem minimale und maximale Werte für das Motordrehmoment und das Kupplungsdrehmoment sowie minimale und maximale Werte für die Ableitungen dieser Drehmomente festgelegt werden.

3. Verfahren nach einem der vorhergehenden Ansprüche, wobei die Komfort-Nebenbedingungen definiert werden, indem festgelegt wird, dass die Schlupfdrehzahl und ihre Ableitung während der Phase des Einrückens der Kupplung gleich null sein müssen.

4. Verfahren nach einem der vorhergehenden Ansprüche, wobei der Sollwert $\omega_{sl}^{ref}$ für jeden Steuerungsschritt k definiert ist durch:

$$\forall i \in \left\{1, \ldots, N_p - 1\right\}$$

$$\omega_{sl}^{ref}(k+i) = \frac{1 - i/N_f^*}{\left(1 + \lambda \cdot i/N_f^*\right)^2} \omega_{sl}^k$$

wobei:

- $N_P$ eine ganze Zahl ist, die einen Vorhersagehorizont definiert;
- $\lambda$ ein zu kalibrierender Parameter ist.

5. Verfahren nach Anspruch 4, wobei der Parameter $\lambda$ so gewählt wird, dass das Einrücken mit einer Ableitung der Schlupfdrehzahl erfolgt, die nahezu gleich null ist.

6. Verfahren nach einem der vorhergehenden Ansprüche, wobei ein zweiter Sollwert $\omega_e^{ref}$ für die Motordrehzahl erzeugt wird, der definiert ist durch:

$$\omega_e^{ref} = \max\left\{\omega_e^0, \, T^{-1}\left(T_e^d\left(X_{Pedal}, \omega_e\right)\right)\right\}$$

wobei:

- $\omega_e^0$ ein konstanter Leertaufsoitwert ist;

- T ein maximales Drehmoment in Abhängigkeit von der Drehzahl $\omega_e$ ist;

- $\overline{I_{\varepsilon}}$ ein von dem Fahrer angefordertes Motordrehmoment ist,

- $X_{Pedal}$ eine Position des Gaspedals ist.

**Fig. 1**

**Fig. 2**

Régime moteur

Couple moteur

| Génération consigne couple moteur | Consigne couple moteur | Contrôle couple moteur | | Moteur | | Vilebrequin |

Demande de couple (conducteur)

Position embrayage

Couple embrayage transmis

Couple de charge

| Génération consigne couple embrayage | Consigne couple (position) embrayage | Actionneur embrayage | Courbe de transmissibilité | Transmission et véhicule |

Régime (accélération) primaire / sécondaire / roues

**Fig. 3**

**Fig. 4**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1072459 A

**Littérature non-brevet citée dans la description**

- **D. Q. MAYNE ; B. RAWLINGS ; C. V. RAO ; P. O. SCOKAERT.** Constrained model predictive control: Stability and optimality. *Automatica,* 2000, vol. 36, 789-814